# EUROPÄISCHE PATENTANMELDUNG

(11) **EP 1 550 807 A1**
(43) Veröffentlichungstag der Anmeldung: **06.07.2005**
(21) Anmeldenummer: 03090459.3
(22) Anmeldetag: 30.12.2003
(51) Int. Cl.: F03D 1/04

(54) **Verfahren und Vorrichtung zur Strömungsbeschleunigung einer Windenergie- oder Wasserstromanlage**

(71) Anmelder: Dohm, Rudolf, 13156 Berlin (DE); Ebert, Ronny, 08056 Zwickau (DE); Ebert, Jens, 08144 Ebersbrunn (DE); Burakovski, Dmitrij, 13627 Berlin (DE); Arzig, René Steffen, 08062 Zwickau (DE)
(72) Erfinder: Dohm, Rudolf, 13156 Berlin (DE); Ebert, Ronny, 08056 Zwickau (DE); Ebert, Jens, 08144 Ebersbrunn (DE); Burakovski, Dmitrij, 13627 Berlin (DE); Arzig, René Steffen, 08062 Zwickau (DE)
(74) Vertreter: Kietzmann, Manfred

(57) **Zusammenfassung**

Es wird ein Verfahren und eine Vorrichtung zur Strömungsbeschleunigung bei einer Windenergie- oder Wasserstromanlage vorgestellt.

Die Vorrichtung besteht aus einer mit einer oder mehreren Turbinen (2) bestückten Fläche (1), die außen vollständig oder teilweise von einem strömungstechnisch optimierten Profil (3) umgeben ist. Dabei schließen sich an das Profil (3) weitere beabstandet angeordnete Profile (6) oder (8) an, so dass der Raum hinter der oder den Turbinen (2) sich vergrößert, wobei die Profile (6) oder (8) so ausgerichtet oder profiliert sind, dass sie die im Grenzbereich der Profile (6) oder (8) außen entlang strömende Strömung nach innen hinter die Turbine oder die Turbinen (2) ablenken oder die hinter der oder den Turbinen (2) im Grenzbereich der Profile innen entlang strömende Strömung nach außerhalb der Profile ablenken.

Die Strömungstrennung bewirkt eine Unterdruckzone hinter der oder den Turbinen (2).

## Beschreibung

Die Erfindung betrifft ein Verfahren und eine Vorrichtung zur Strömungsbeschleunigung bei Windenergie- und Wasserstromenergieanlagen.

Aus der DE 202 01 215 U1 ist es bereits bekannt, bei einem in sich geschlossenen Strömungskörper, der eine nach dem Multi-Turbinen-Prinzip mit den Turbinen bestückte Fläche umfaßt, die auf diesen Strömungskörper ankommende Strömung nach außen abzulenken, um eine Unterdruckzone hinter der Turbine entstehen zu lassen. Dabei kommen hintereinandergestaffelte Strömungskörper zum Einsatz, deren Mantellinie konusförmig oder keilförmig ausgebildet ist.

Aufgabe der vorliegenden Erfindung ist es, dieses System strömungstechnisch zu optimieren und eine technische Grundausstattung zu schaffen, die eine einfache Anpassung der Vorrichtung an die jeweiligen Strömungsverhältnisse ermöglicht.

Gelöst wird diese Aufgabe mit dem Verfahrensanspruch 1 und dem Vorrichtungsanspruch 7. Vorteilhafte Ausgestaltungen sind Gegenstand der Unteransprüche.

Verfahrensgemäß ist zur Strömungsbeschleunigung bei einer Windenergie- oder Wasserstromanlage, die eine mit einer oder mehreren Turbinen bestückte Fläche umfaßt, die außen vollständig oder teilweise von einem strömungstechnisch optimierten Profil umgeben ist, wobei sich an das Profil weitere beabstandet angeordnete Profile anschließen, vorgesehen, dass der ankommende Strom getrennt wird in eine Strömung, die die Turbine oder Turbinen durchströmt, eine Strömung, die im Grenzbereich der Profile außen entlang strömt und nach innen hinter die Turbine oder die Turbinen durch und nach innen hinter die Turbine oder die Turbinen durch die einzelnen Profile abgelenkt wird sowie eine Strömung außerhalb des Grenzbereiches, die durch die Profile nach außen abgelenkt wird und damit eine Unterdruckzone hinter der oder den Turbinen erzeugt. Alternativ kann der ankommende Strom getrennt werden in eine Strömung, die die Turbine oder die Turbinen durchströmt, wobei die hinter der oder den Turbinen im Grenzbereich der Profile innen entlang strömende Strömung nach außerhalb der Profile abgelenkt wird und eine Strömung außerhalb der Profile, die durch die Profile nach außen abgelenkt wird und damit eine Unterdruckzone hinter der oder den Turbinen erzeugt.

Ein größtmöglicher Effekt wird erreicht, wenn die Strömung, die im Grenzbereich der Profile außen entlang strömt und nach innen hinter die Turbine oder die Turbinen durch die einzelnen Profile in einen inneren Grenzbereich zu den Profilen abgelenkt wird oder wenn die hinter der oder den Turbinen im Grenzbereich der Profile innen entlang strömende Strömung nach außerhalb in den Grenzbereich der Profile abgelenkt wird. Die Umlenkung der Strömung erfolgt vorzugsweise tangential zu den Mantellinien der Profile.
Der innere und äußere Grenzbereich zu den Profilen umfaßt dabei einen Profilabstand von bevorzugt bis 2x den Abstand zwischen der inneren und äußeren Mantellinie der Profile.

Um zu verhindern, dass die Strömung hinter den Turbinen abreißt, ist in einer vorteilhaften Ausgestaltung vorgesehen, dass ein zentrisch innerhalb der Profile angeordneter Strömungskörper den Strömungsquerschnitt hinter der oder den Turbinen bezogen auf den Gesamtquerschnitt des durch die Profile gebildeten Raumes verkleinert.

Erfindungsgemäße Vorrichtungen sollen anhand der Zeichnungen näher beschrieben werden.

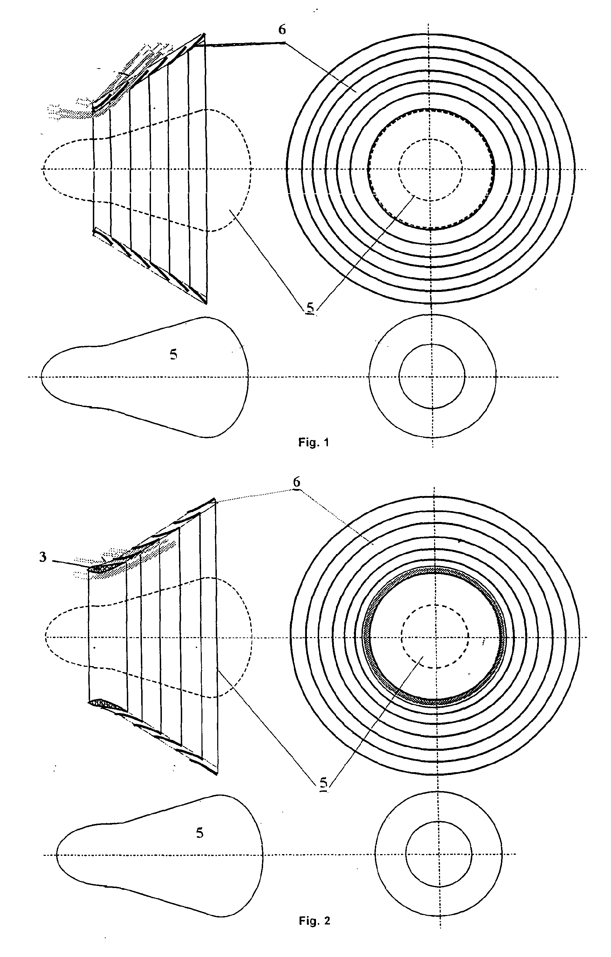

**Fig. 1** zeigt eine konische Anordnung der Vorrichtung, bestehend aus einzelnen beabstandet angeordneten ringförmigen Profilen 6, einem zentralen Strömungskörper 5, wobei der ankommende Strom getrennt wird in eine Strömung, die die Turbine oder Turbinen 2 durchströmt, wobei die hinter der oder den Turbinen 2 im Grenzbereich der Profile 6 innen entlang strömende Strömung nach außerhalb der Profile 6 abgelenkt wird und eine Strömung außerhalb der Profile 6, die durch die Profile 6 nach außen abgelenkt wird und damit eine Unterdruckzone hinter der oder den Turbinen 2 erzeugt.

**Fig. 2** zeigt eine konische Anordnung der Vorrichtung bestehend aus einzelnen beabstandet angeordneten ringförmigen Profilen 6, einem zentralen Strömungskörper 5, wobei der ankommende Strom getrennt wird in eine Strömung, die die Turbine oder Turbinen 2 durchströmt, eine Strömung, die im Grenzbereich der Profile 6 außen entlang strömt und nach innen hinter die Turbine oder die Turbinen 2 durch die einzelnen Profile 6 abgelenkt wird sowie eine Strömung außerhalb des Grenzbereiches, die durch die Profile 6 nach außen abgelenkt wird und damit eine Unterdruckzone hinter der oder den Turbinen 2 erzeugt.

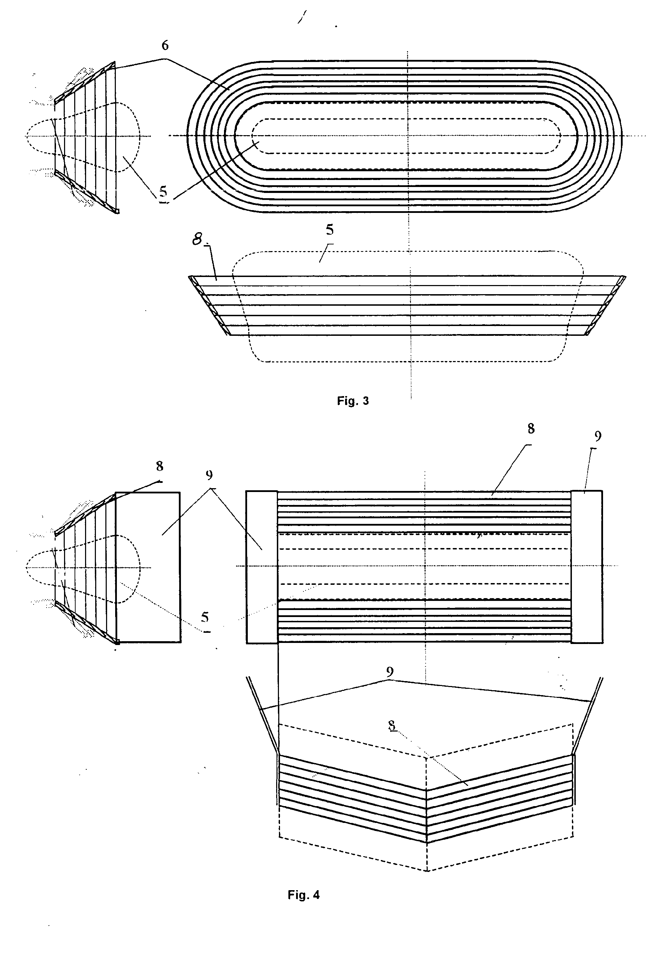

**Fig. 3** stellt eine Vorrichtung analog Fig.1 dar, wobei hier die ringförmigen Profile 6 oben und unten stark abgeflacht sind, so dass der Raum hinter den Turbinen 2 sich keilförmig erweitert.

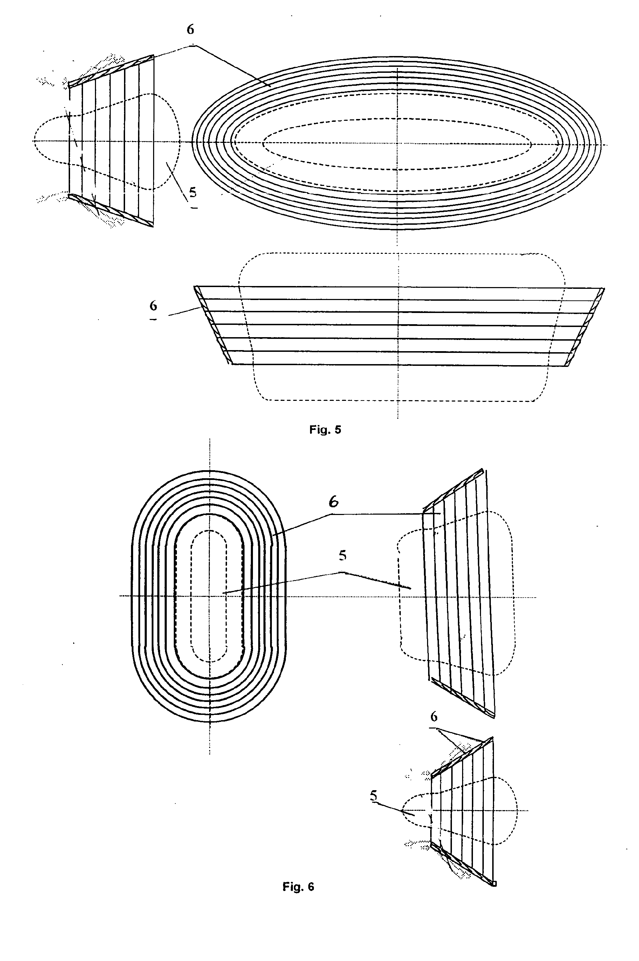

**Fig. 4** beschreibt die Vorrichtung analog Fig. 3, wobei hier auf die seitlichen Rundungen der Profile verzichtet wird und die Anordnung der Profile 8 lamellenartig erfolgt. Der Raum hinter den Turbinen 2 erweitert sich hier ebenfalls keilförmig, wobei die gemeinsame Mantellinie gerade, konkav oder konvex sein kann.

Die Darstellung in Fig. 3 und 4 entspricht strömungstechnisch jeweils der Fig. 1. Natürlich ist auch eine der Fig. 2 entsprechende strömungstechnisch Anordnung geeignet, eine Strömungsbeschleunigung zu erzielen.

In **Fig. 5** ist eine weitere Ausbildung der ringförmigen Profile 6 dargestellt, hier in elipsenartiger Form.

Die Abflachungen der ringförmigen Profile 6 gemäß der Fig. 3 und 5 müssen nicht oben und unten erfolgen. Auch seitlich ist dies möglich, wie in **Fig. 6** dargestellt ist.

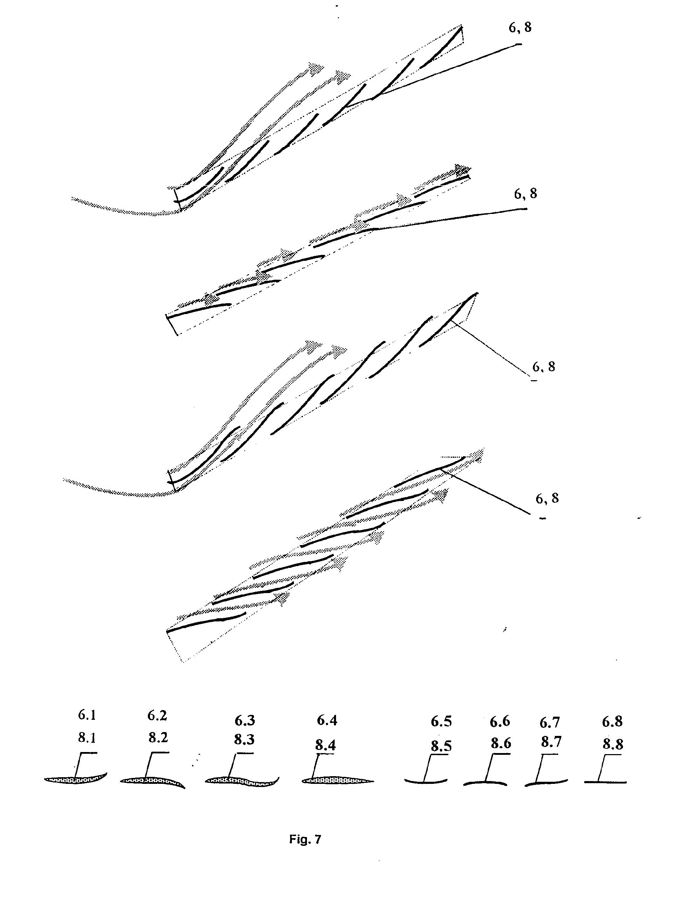

**Fig. 7** zeigt noch einmal detaillierter die beiden Grundvarianten der Anordnung der Profile 6 oder 8, um die Strömung im Grenzbereich der Profile 6 oder 8 entweder nach außen oder nach innen zu lenken. In einer bevorzugten Anordnung sind die Profile 6 oder 8 zu einander so versetzt, dass die Profilnase des jeweils nachkommenden Profils unterhalb des Profilendes des vorherkommenden Profils liegt oder die Profile 6 oder 8 sind zueinander so versetzt angeordnet, dass die Profilnase des jeweils nachkommenden Profils oberhalb des Profilendes des vorherkommenden Profils liegt.

Eine weitere Ausgestaltung sieht vor, dass die beabstandet angeordneten Profile 6 oder 8 bezogen auf ihre gemeinsame Achse bzw. Mittelfläche verschiebbar angeordnet sind. Das schafft zusätzliche Möglichkeiten zur Veränderung des Durchströmquerschnittes.

Die Profile 6 oder 8 können selbst strömungoptimiert sein oder auch aus einfachen Metallstreifen bestehen.

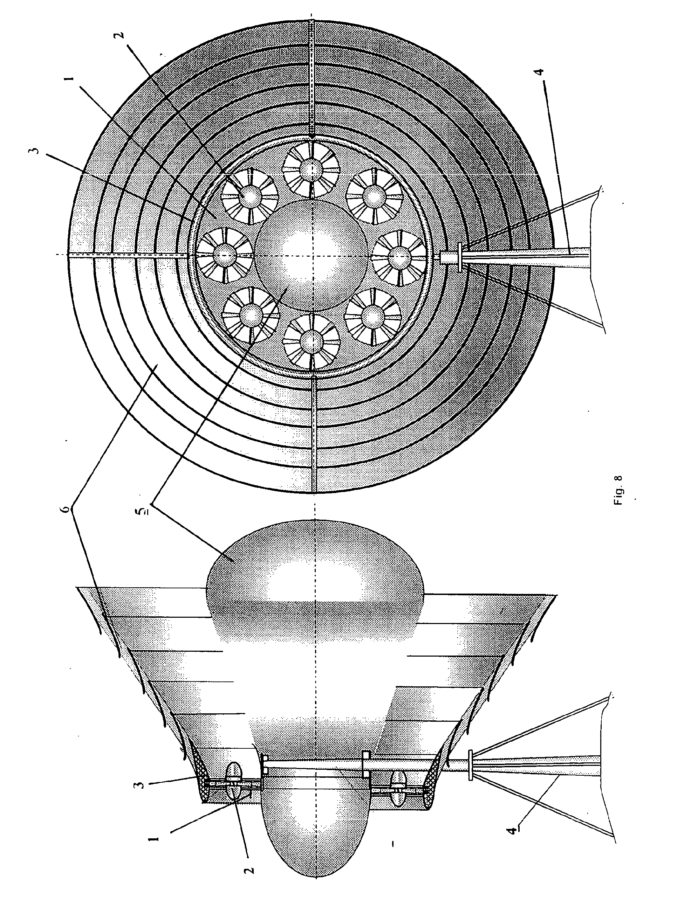

In den folgenden Fig. 8 bis 11 sind Ausführungsformen der gesamten erfindungsgemäßen Vorrichtung dargestellt.

**Fig. 8** zeigt eine mit mehreren Turbinen 2 bestückte Fläche 1, die außen vollständig von einem strömungstechnisch optimierten Profil 3 umgeben ist, wobei sich an das Profil 3 weitere beabstandet angeordnete Profile 6 anschließen, so dass der Raum hinter den Turbinen 2 sich vergrößert, wobei die Profile 6 so ausgerichtet oder profiliert sind, dass sie die im Grenzbereich der Profile 6 außen entlang strömende Strömung nach innen hinter die Turbinen ablenken. Zentrisch innerhalb der Profile 6 ist ein Strömungskörper 5 angeordnet, der den Strömungsquerschnitt hinter der oder den Turbinen 2 bezogen auf den Gesamtquerschnitt verkleinert, so dass ein Abreißen der Strömung verhindert wird.

Mit seinem Vorderteil leitet er darüber hinaus die ankommende Strömung in Richtung Turbinen 2.

Sowohl das Profil 3 als auch die weiteren beabstandet angeordneten Profile 6 sind ringförmig ausgebildet, so dass der Raum hinter den Turbinen 2 sich kegelstumpfförmig vergrößert, wobei die gemeinsame Mantellinie gerade, konkav oder konvex ist. Am ringförmigen Profil 3 sind strahlenförmig nach hinter die Turbinen 2 weisende Schwerter 7 angeordnet, an denen die Profile 6 befestigt sind. Die Profile 6 können so aus Kreisringabschnitten gebildet werden, vorzugsweise aus jeweils vier.

Die mit den Turbinen 2 bestückte Fläche 1, die außen vollständig oder teilweise von einem strömungstechnisch optimierten Profil 3 umgeben ist, sowie die sich an das Profil 3 beabstandet anschließenden Profile 6 sind drehbar um eine senkrechte Achse an einem Mast 4 angeordnet.

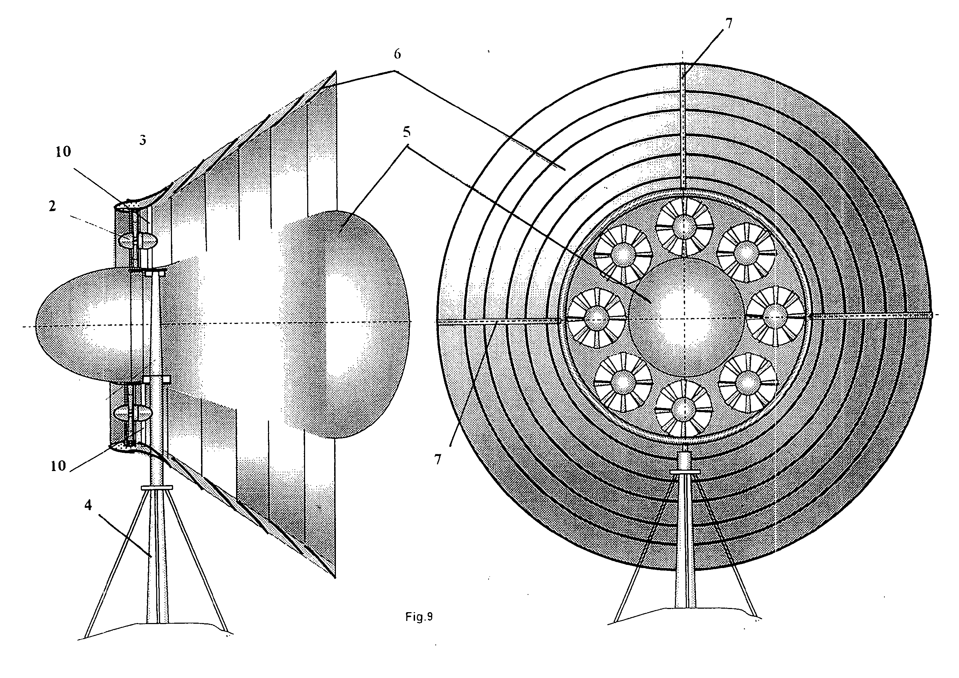

Der Aufbau in **Fig. 9** ist analog dem von Fig. 8, wobei hier hinter den Turbinen 2 Blenden 10 angeordnet sind, die über Öffnungen verfügen, die in kurzzeitigen Intervallen verschließbar und öffenbar sind, so dass die Strömung pulsierende Eigenschaften bekommt.

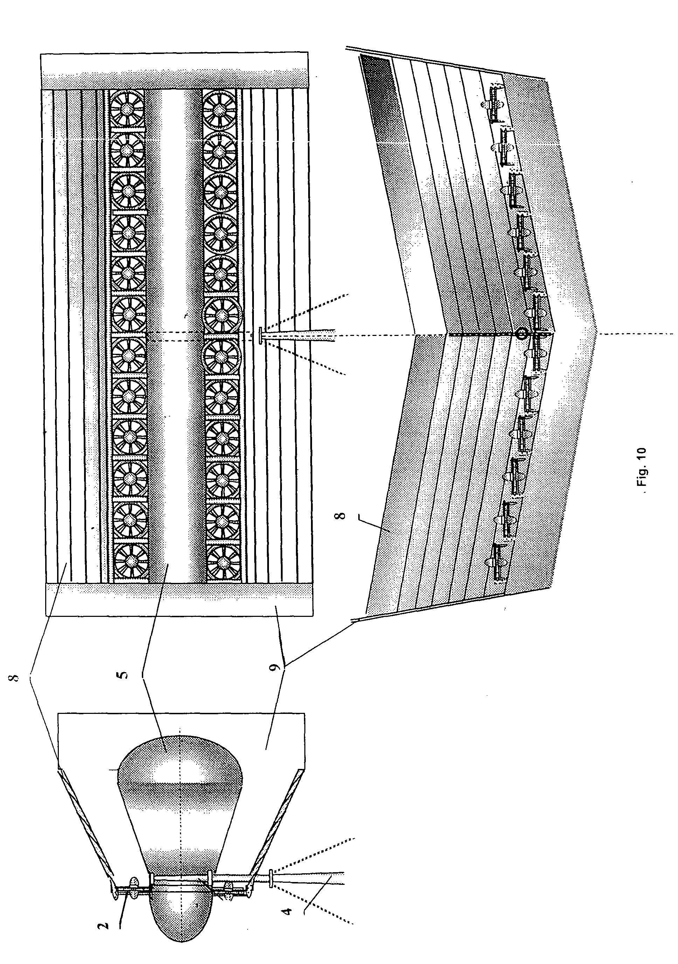

**Fig. 10** zeigt eine Ausführung mit lamellenartigen Profilen 8 in waagerechter Ausführung. Der Raum hinter den Turbinen 2 vergrößert sich hier keilförmig. Zentrisch innerhalb der Profile 8 ist der Strömungskörper 5 angeordnet, der den Strömungsquerschnitt hinter den Turbinen 2 verkleinert, so dass ein Abreißen der Strömung verhindert wird. Der Strömungskörper 5 ist bei dieser Anordnung balkenförmig ausgebildet und parallel zu den lammelartigen Profilen 8 angeordnet. Zum Ausrichten der Vorrichtung gegen die Strömungsrichtung dient jeweils ein an den seitlichen Begrenzungen der lamellenartigen Profile 8 angeordneter und in Strömungsrichtung weisender Spoiler 9.

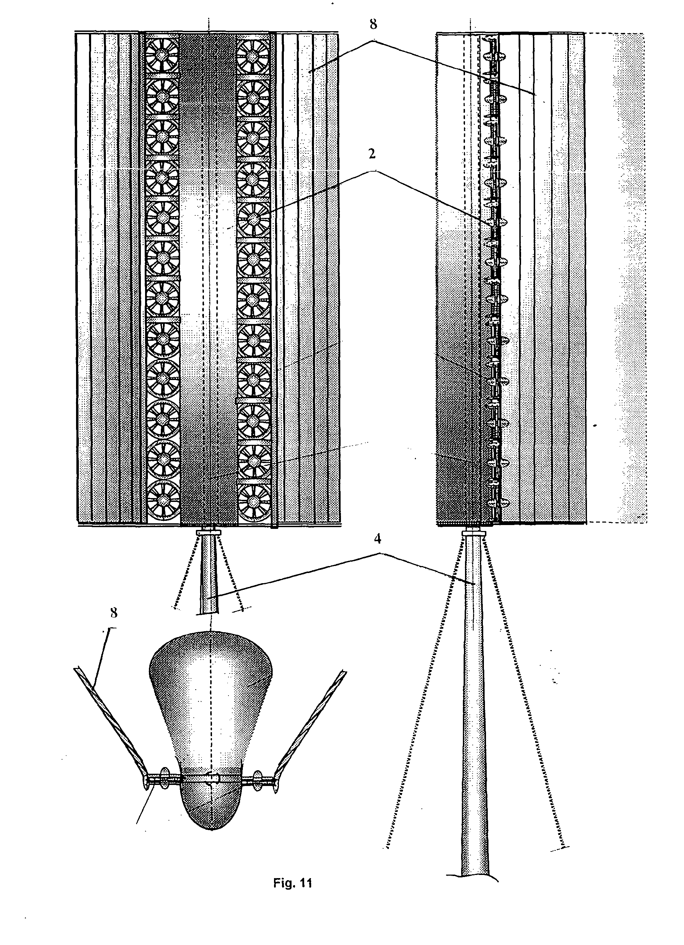

**Fig. 11** zeigt die Vorrichtung mit lamellenartigen Profilen 8 in senkrechter Ausführung. Diese weist im Gegensatz zu den vorherigen Konstruktionen, bei denen der Mast 4 im Bereich der Fläche 1 angeordnet war, eine Anordnung deutlich davor auf. Das hat den Vorteil, dass sich die Vorrichtung selbständig auf die Strömungsrichtung einstellt.

Mit der erfindungsgemäßen Vorrichtung entsteht ein Baukastensystem, mit dem zum Beispiel unter Verwendung eines einzigen Typs von Turbinen 2 durch lammellenartige oder ringförmige Profile 6 oder 8 eine Strömungsoptimierung erreicht werden kann, die den jeweiligen Standortbedingungen angepaßt ist.

### Bezugszeichenliste

- 1: mit Turbinen bestückte Fläche
- 2: Turbine
- 3: Profil um die Fläche 1
- 4: Mast
- 5: zentraler Strömungskörper
- 6: ringförmiges Profil
- 7: Schwert
- 8: lamellenförmiges Profil
- 9: Spoiler
- 10: Blende

## Patentansprüche

1. Verfahren zur Strömungsbeschleunigung bei einer Windenergie- oder Wasserstromanlage, die eine mit einer oder mehreren Turbinen bestückte Fläche umfaßt, die außen vollständig oder teilweise von einem strömungstechnisch optimierten Profil umgeben ist, wobei sich an das Profil weitere beabstandet angeordnete Profile anschließen, so dass der ankommende Strom getrennt wird in eine Strömung, die die Turbine oder Turbinen durchströmt, eine Strömung, die im Grenzbereich der Profile außen entlang strömt und nach innen hinter die Turbine oder die Turbinen durch die einzelnen Profile abgelenkt wird sowie eine Strömung außerhalb des Grenzbereiches, die durch die Profile nach außen abgelenkt wird und damit eine Unterdruckzone hinter der oder den Turbinen erzeugt oder der ankommende Strom getrennt wird in eine Strömung, die die Turbine oder Turbinen durchströmt, wobei die hinter der oder den Turbinen im Grenzbereich der Profile innen entlang strömende Strömung nach außerhalb der Profile abgelenkt wird und eine Strömung außerhalb der Profile, die durch die Profile nach außen abgelenkt wird und damit eine Unterdruckzone hinter der oder den Turbinen erzeugt.

2. Verfahren nach Anspruch 1, **dadurch gekennzeichnet, dass**
die Strömung, die im Grenzbereich der Profile außen entlang strömt und nach innen hinter die Turbine oder die Turbinen durch die einzelnen Profile in einen inneren Grenzbereich zu den Profilen abgelenkt wird.

3. Verfahren nach Anspruch 1, **dadurch gekennzeichnet, dass**
die hinter der oder den Turbinen im Grenzbereich der Profile innen entlang strömende Strömung nach außerhalb in den Grenzbereich der Profile abgelenkt wird.

4. Verfahren nach einem der Ansprüche 1 bis 3, **dadurch gekennzeichnet, dass**
der innere und äußere Grenzbereich zu den Profilen vorzugsweise bis 2x den Abstand zwischen der inneren und äußeren Mantellinie umfaßt.

5. Verfahren nach einem der Ansprüche 1 bis 4, **dadurch gekennzeichnet, dass**
die von innen nach außen oder von außen nach innen gelenkte Strömung vorzugsweise tangential zu der jeweiligen Mantellinie verläuft.

6. Verfahren nach einem der Ansprüche 1 bis 5, **dadurch gekennzeichnet, dass**
ein zentrisch innerhalb der Profile angeordneter Strömungskörper den Strömungsquerschnitt hinter der oder den Turbinen gegenüber dem Gesamtquerschnitt der Profile verkleinert, so dass ein Abreißen der Strömung verhindert wird.

7. Vorrichtung zur Durchführung des Verfahrens nach Anspruch 1 bestehend aus
einer mit einer oder mehreren Turbinen (2) bestückten Fläche (1), die außen vollständig oder teilweise von einem strömungstechnisch optimierten Profil (3) umgeben ist, wobei sich an das Profil (3) weitere beabstandet angeordnete Profile (6) oder (8) anschließen, so dass der Raum hinter der oder den Turbinen (2) sich vergrößert, wobei die Profile (6) oder (8) so ausgerichtet oder profiliert sind, dass sie die im Grenzbereich der Profile (6) oder (8) außen entlang strömende Strömung nach innen hinter die Turbine oder die Turbinen (2) ablenken oder die hinter der oder den Turbinen (2) im Grenzbereich der Profile innen entlang strömende Strömung nach außerhalb der Profile abgelenken.

8. Vorrichtung nach Anspruch 7, **dadurch gekennzeichnet, dass**
zentrisch innerhalb der Profile (6) oder (8) ein Strömungskörper (5) angeordnet ist, der den Strömungsquerschnitt bezogen auf den Gesamtquerschnitt der Profile (6) oder (8) hinter der oder den Turbinen (2) verkleinert, so dass ein Abreißen der Strömung verhindert wird.

9. Vorrichtung nach Anspruch 7 oder 8, **dadurch gekennzeichnet, dass**
sowohl das Profil (3) als auch die weiteren beabstandet angeordneten Profile (6) ringförmig ausgebildet sind, so dass der Raum hinter der oder den Turbinen (2) sich kegelstumpfförmig vergrößert, wobei die gemeinsame Mantellinie gerade, konkav oder konvex ist.

10. Vorrichtung nach Anspruch 9, **dadurch gekennzeichnet, dass**
am ringförmigen Profil (3) strahlenförmig nach hinter die Turbine oder die Turbinen (2) weisende Schwerter (7) angeordnet sind, an denen die Profile (6) befestigt sind.

11. Vorrichtung nach Anspruch 9 oder 10, **dadurch gekennzeichnet, dass**
die Profile (6) aus Kreisringabschnitten, vorzugsweise jeweils vier gebildet sind.

12. Vorrichtung nach Anspruch 7 oder 8, **dadurch gekennzeichnet, dass**
die Profile (8) lamellenartig angeordnet sind, so dass der Raum hinter der oder den Turbinen (2) sich keilartig vergrößert, wobei die gemeinsame Mantellinie gerade, konkav oder konvex ist.

13. Vorrichtung nach Anspruch 12, **dadurch gekennzeichnet, dass**
die lamellenartig angeordneten Profile (8) eine senkrechte Position einnehmen.

14. Vorrichtung nach Anspruch 12, **dadurch gekennzeichnet, dass**
die lamellenartig angeordneten Profile (8) eine waagerechte Position einnehmen.

15. Vorrichtung nach einem der Ansprüche 7 bis 14, **dadurch gekennzeichnet, dass**
die beabstandet angeordneten Profile (6) oder (8) bezogen auf ihre gemeinsame Achse bzw. Mittelfläche verschiebbar angeordnet sind, um zusätzliche Möglichkeiten zur Veränderung des Durchströmquerschnittes zu schaffen.

16. Vorrichtung nach einem der Ansprüche 7 bis 15, **dadurch gekennzeichnet, dass**
hinter der oder den Turbinen (2) Blenden (10) angeordnet sind, die über Öffnungen verfügen, die in kurzzeitigen Intervallen verschließbar und öffenbar sind, so dass die Strömung pulsierende Eigenschaften bekommt.

17. Vorrichtung nach einem der Ansprüche 7 bis 16, **dadurch gekennzeichnet, dass**
die mit einer oder mehreren Turbinen (2) bestückte Fläche (1), die außen vollständig oder teilweise von einem strömungstechnisch optimierten Profil (3) umgeben ist, sowie die sich an das Profil (3) beabstandet anschließenden Profile (6) oder (8) drehbar um eine senkrechte Achse an einem Mast (4) angeordnet sind.

18. Vorrichtung nach Anspruch 17, **dadurch gekennzeichnet, dass**
die Achse sich im Bereich der Fläche (1) oder davor befindet.

19. Vorrichtung nach einem der Ansprüche 7 bis 18, **dadurch gekennzeichnet, dass**
die Profile (6) oder (8) zueinander so versetzt angeordnet sind, dass die Profilnase des jeweils nachkommenden Profils oberhalb des Profilendes des vorherkommenden Profils liegt.

20. Vorrichtung nach einem der Ansprüche 7 bis 19, **dadurch gekennzeichnet, dass**
die Profile (6) oder (8) zu einander so versetzt sind, dass die Profilnase des jeweils nachkommenden Profils unterhalb des Profilendes des vorherkommenden Profils liegt.
